Europäisches Patentamt

(19) European Patent Office

Office européen des brevets

(11) Numéro de publication : **0 087 996**
**B1**

(12) **FASCICULE DE BREVET EUROPÉEN**

(45) Date de publication du fascicule du brevet :
30.10.85

(21) Numéro de dépôt : **83400313.9**

(22) Date de dépôt : **15.02.83**

(51) Int. Cl.⁴ : **B 23 Q 7/04, B 23 Q 1/16**

(54) Dispositif de chargement et déchargement de pièces pour une machine-outil telle qu'une machine de tournage.

(30) Priorité : 26.02.82 FR 8203267

(43) Date de publication de la demande :
07.09.83 Bulletin 83/36

(45) Mention de la délivrance du brevet :
30.10.85 Bulletin 85/44

(84) Etats contractants désignés :
AT BE CH DE GB IT LI LU NL SE

(56) Documents cités :
DE-A- 2 220 161
FR-A- 1 151 562

(73) Titulaire : **MANUFACTURE DE MACHINES DU
HAUT-RHIN S.A. (MANURHIN)**
**10, rue de Soultz**
**F-68100 Mulhouse (FR)**

(72) Inventeur : **Schmitt, Hubert**
**15, rue de Niffer**
**F-68110 Illzach (FR)**
Inventeur : **Deck, Maurice**
**·2, rue du Rivage**
**F-68120 Pfastatt (FR)**

(74) Mandataire : **Corre, Jacques Denis Paul et al**
**Cabinet Regimbeau 26, Avenue Kléber**
**F-75116 Paris (FR)**

Jouve, 18, rue St-Denis, 75001 Paris, France

## Description

La présente invention concerne un dispositif de chargement et déchargement de pièces pour une machine-outil, telle qu'une machine de tournage.

On connaît déjà des dispositifs de chargement et déchargement capables de prendre une pièce en un point d'amenée, de la mettre en place dans la broche d'une machine-outil telle qu'une machine de tournage, puis de l'en extraire et de la poser en un point d'évacuation généralement différent du point d'amenée.

Par exemple, un type de dispositif de chargement et déchargement de pièces pour une machine de tournage présentant des moyens porte-pièce d'axe déterminé, connu du fait de FR-A-1 151 562, comporte un support porté par la machine et un organe de préhension pour une pièce, lequel est solidaire d'un bras présentant une direction moyenne propre, relié au support par l'intermédiaire de moyens d'articulation guidant le bras de telle sorte que sa direction moyenne décrive une surface conique de révolution autour d'un axe fixe par rapport au support pour autoriser le déplacement de l'organe de préhension par rapport au support entre au moins deux positions privilégiées dans lesquelles cet organe de préhension est respectivement placé dans l'axe des moyens porte-pièce, par rapport auquel la direction moyenne du bras présente alors une orientation déterminée, et décalé par rapport à celui-ci.

Dans ce dispositif connu, le demi-angle au sommet de la surface conique est de 45°, et l'axe de cette surface est orienté à 45° par rapport à l'horizontale, dans un plan vertical parallèle à l'axe, horizontal, des moyens porte-pièce de la machine ; dans les deux positions privilégiées de l'organe de préhension, la direction moyenne du bras est respectivement horizontale et verticale à l'intérieur de ce plan, qui est situé à proximité immédiate de l'axe des moyens porte-pièce ; de ce fait, les possibilités d'application de ce dispositif sont extrêmement limitées en termes de structure et de cotes de la machine-outil équipée.

Pourtant, un tel type de dispositif se révèle avantageux en ce qu'il présente un encombrement compatible avec l'accès aux moyens porte-pièce pour l'opérateur et impose une trajectoire minimale aux pièces, ce qui offre l'intérêt d'un temps de chargement et de déchargement réduit.

Le but de la présente invention est de proposer un dispositif de ce type qui, fabriqué de façon standardisée, puisse s'accommoder sans difficulté des conditions propres de montage et de fonctionnement sur des machines-outils, telles que des machines de tournage, présentant des caractéristiques de structure et des cotes d'encombrement très différentes.

A cet effet, la présente invention propose un dispositif du type connu évoqué plus haut, et caractérisé en ce qu'il comporte des moyens pour régler la conicité de ladite surface conique.

On démontre qu'ainsi, il est possible d'adapter un même dispositif de chargement et déchargement de pièces à des machines-outils présentant des caractéristiques structurelles et dimensionnelles différentes notamment en termes de possibilité d'implantation du dispositif de chargement et déchargement dans le sens de la hauteur par rapport à l'axe des moyens porte-pièce, en conservant une même orientation prédéterminée du bras par rapport à cet axe lorsque l'organe de préhension est placé selon ce dernier ; cette orientation est dictée par la structure de l'organe de préhension.

Lorsque l'on met en œuvre l'invention, la valeur 45° du demi-angle au sommet de la surface conique ne constitue que l'une des possibilités du dispositif, correspondant à l'utilisation sur certaines machines-outils, alors que l'utilisation sur d'autres machines, présentant des caractéristiques d'encombrement différentes, conduit à adopter une autre valeur comme on le verra plus loin.

Selon un mode de mise en œuvre préféré de l'invention, en outre, il est prévu des moyens pour régler l'orientation de l'axe de la surface conique.

Avantageusement, l'orientation de l'axe de la surface conique peut ainsi être réglée en termes d'inclinaison par rapport à un plan horizontal, ce qui permet de préserver la possibilité d'évitement des superstructures de la machine par le bras, l'organe de préhension, et la pièce qu'il porte éventuellement, quelle que soit la conicité choisie conformément à l'invention, et/ou en termes d'orientation d'un plan vertical incluant l'axe de la surface conique par rapport à l'axe des moyens porte-pièce, ce qui permet de choisir en outre la position du bras lorsque l'organe de préhension occupe sa position privilégiée décalée par rapport à l'axe des moyens porte-pièce, c'est-à-dire lors de la prise en charge de pièces en vue de les placer dans les moyens porte-pièce, et lors du dépôt de ces pièces après qu'elles aient été dégagées de ces moyens, quels que soient les réglages par ailleurs adoptés.

Selon un mode de mise en œuvre particulièrement avantageux, il est en outre prévu des moyens pour régler la position de l'organe de préhension par rapport à l'intersection de la direction moyenne du bras et de l'axe de la surface conique.

Egalement, avantageusement, des moyens peuvent être prévus pour autoriser la rotation du bras sur lui-même autour de sa direction moyenne, ce qui permet de régler l'orientation de l'organe de préhension, c'est-à-dire de la pièce, dans lesdites positions privilégiées en fonction des besoins et des réglages par ailleurs adoptés.

On conçoit qu'il résulte de ces caractéristiques, une grande souplesse d'adaptation du dispositif de chargement et déchargement selon l'invention à des machines-outils présentant des caractéristiques très différentes.

Néanmoins, le dispositif selon l'invention se prête à des modes de réalisation simples, et d'un prix de revient réduit.

**0 087 996**

Lorsque, selon un mode de mise en œuvre préféré de l'invention, des moyens sont en outre prévus pour déplacer le support à la translation suivant une direction parallèle à l'axe des moyens porte-pièce par rapport à la machine, un tel dispositif offre les mêmes possibilités de positionnement de la pièce que les manipulateurs beaucoup plus complexes et encombrants, tout en ne présentant qu'un axe de rotation unique, en offrant des possibilités de combinaison simple de mouvements, facilement contrôlable en continu, d'où à la fois un prix de revient réduit, une trajectoire minimale de la pièce, c'est-à-dire un temps de chargement et de déchargement réduit, et, du fait de la forme conique de cette trajectoire, un minimum d'encombrement.

D'autres caractéristiques et avantages de l'invention ressortiront de la description ci-dessous, relative à un mode de mise en œuvre non limitatif, et des dessins annexés qui font partie intégrante de cette description.

La figure 1 montre une vue schématique, en perspective, d'un dispositif selon l'invention en service sur une machine de tournage.

La figure 2 montre en une vue analogue le dispositif lors de la prise de la mise en place d'une pièce dans la broche (trait plein) ou immédiatement avant cette mise en place ou après l'extraction de la pièce (en pointillés).

La figure 3 montre le dispositif dans une position intermédiaire.

La figure 4 montre le dispositif en position de dépose d'une pièce reprise sur le tour (en trait plein) et en position de prise d'une nouvelle pièce à tourner (en pointillés).

La figure 5 illustre, en une vue analogue à celle de la figure 1, un exemple de mode de réglage du dispositif.

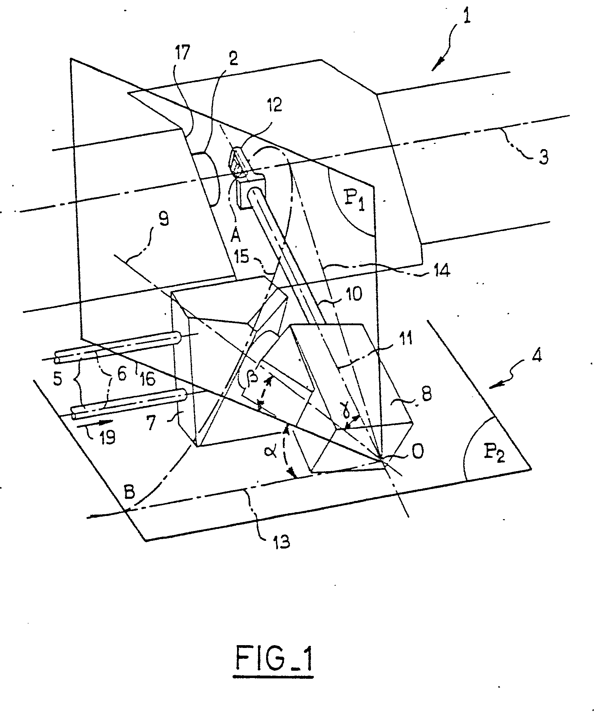

On se référera en premier lieu au dispositif tel qu'il est illustré aux figures 1 à 4.

Sur ces figures, on a désigné de façon générale par 1 tour automatique, présentant une broche porte-pièce 2 d'axe horizontal 3 ; on notera que le domaine d'application du dispositif de chargement et déchargement de pièces selon l'invention n'est pas limité à de telles machines-outils, et qu'il peut être utilisé pour charger et décharger les pièces sur des machines-outils présentant des moyens porte-pièces dont l'axe occupe une position autre qu'horizontale, qu'il s'agisse de machines de tournage ou d'autres machines-outils.

On a désigné de façon générale par 4 le dispositif de chargement et déchargement de pièces selon l'invention.

Ce dispositif 4 est monté sur le tour 1 par l'intermédiaire de moyens de guidage à la translation suivant une direction parallèle à l'axe 3, ces moyens étant en pratique constitués par exemple par deux rails 5 dont les directions moyennes respectives 6 sont parallèles entre elles et parallèles à l'axe 3 ; ces deux rails 5 sont fixés de façon connue en soi latéralement sur le bâti du tour 1.

Le long des rails 5 est monté à la translation, suivant leur direction moyenne 6, un support 7 portant lui-même, dans le sens d'un éloignement par rapport à l'ensemble du tour 1, une tourelle 8 reliée à ce support 7 par tout moyen connu en soi autorisant une rotation de la tourelle 8 autour d'un axe 9 fixe par rapport au support 7, et présentant une orientation avantageusement réglable qui sera définie plus loin.

La tourelle 8 porte elle-même un bras 10 présentant une direction moyenne 11 fixe mais réglable par rapport à la tourelle 8, et coupant l'axe 9 en un point O fixe par rapport au support 7 comme par rapport à la tourelle 8 ; le bras 10 est monté à la rotation sur lui-même autour de sa direction moyenne 11, par rapport à la tourelle 8.

Tout moyen du domaine des connaissances de l'homme du métier est prévu pour commander et contrôler la rotation de la tourelle 8 autour de l'axe 9 par rapport au support 7 et la rotation du bras 10 sur lui-même autour de sa direction moyenne 11 par rapport à la tourelle 8.

On notera que le bras 10 est fixe, mais avantageusement réglable, à la translation suivant sa direction moyenne 11 par rapport à la tourelle 8, et que cette dernière est fixe à la translation suivant l'axe 9 par rapport au support 7.

A l'opposé de sa liaison avec la tourelle 8 si l'on se réfère à sa direction moyenne 11, le bras 10 porte un organe de préhension 12 de toute conception connue en soi, propre à permettre la préhension par cet organe d'une pièce de forme déterminée, dans une position déterminée par rapport à lui.

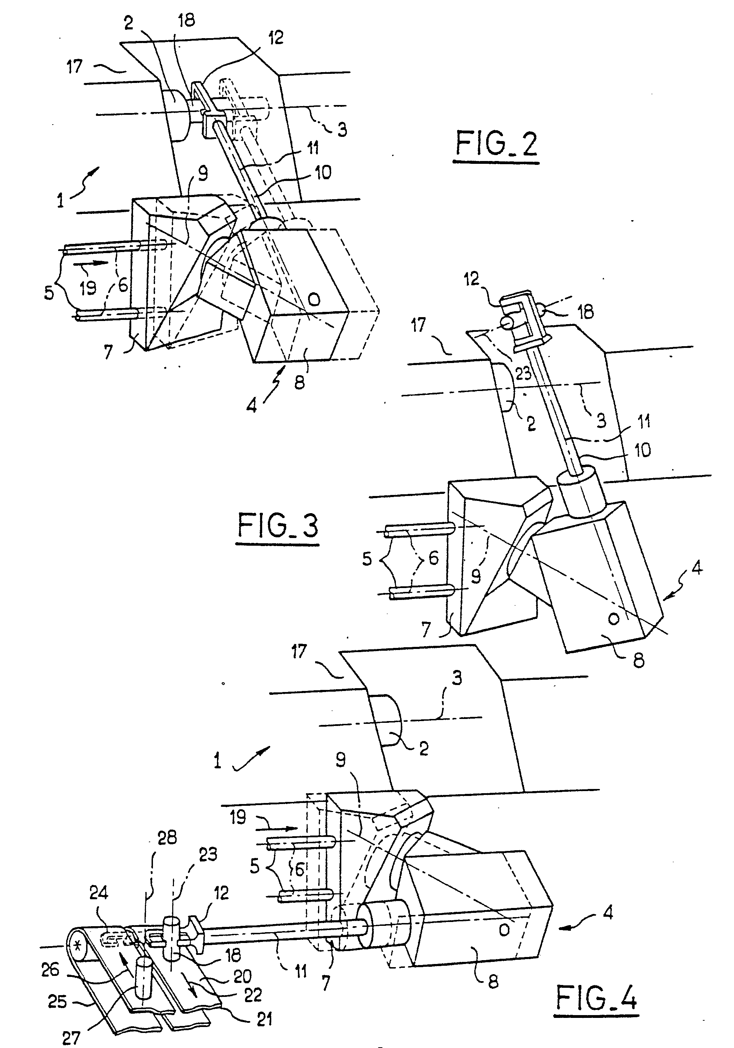

Par une rotation de la tourelle 8 autour de l'axe 9 par rapport au support 7, le bras 10 peut évoluer entre au moins deux positions privilégiées par rapport au support 7, une de ces positions étant illustrée aux figures 1 et 2 et l'autre à la figure 4.

Dans la position illustrée aux figures 1et 2, la direction moyenne 11 du bras 10 est sécante de l'axe 3, par exemple à angle droit, en un point A qui, lorsque l'organe de préhension 12 est en prise avec une pièce, constitue un point de cette pièce et par exemple le centre géométrique de celle-ci ; dans la position illustrée à la figure 4, le point de la direction moyenne 11 du bras 10 placé en A par rapport au support 7 dans le cas des figures 1 et 2, lequel point est fixe par rapport au bras 10 et à l'organe 12, occupe une position B décalée par rapport à l'axe 3, et par exemple telle qu'une ligne 13 passant par les points O et B soit parallèle à l'axe 3, c'est-à-dire perpendiculaire à une ligne passant par les points O et A ; on notera que les points B et A sont placés à la même distance du point O.

Naturellement, ces positions sont indiquées à titre d'exemple non limitatif, et la direction moyenne 11 du bras 10 pourrait évoluer entre des positions fortement écartées d'une position perpendiculaire à l'axe 3 et d'une position parallèle à celui-ci sans que l'on sorte pour autant du cadre de l'invention.

3

Lors du passage de l'une de ces deux positions à l'autre par rotation de la tourelle 8 autour de l'axe 9 par rapport au support 7, la direction moyenne 11 du bras 10 décrit une portion d'une surface 14 conique de révolution autour de l'axe 9, le demi-angle au sommet du cône étant défini par l'angle gamma, fixe mais réglable, que la direction moyenne 11 du bras 10 forme avec l'axe 9 ; lors de cette rotation, le point du bras 10, de l'organe de préhension 12 et de la pièce éventuelle en prise avec ce dernier initialement placé en A ou en B décrit entre ces deux points un cercle 15 d'axe 9.

Si l'on désigne par P1 un plan vertical incluant l'axe 9 et par P2 un plan horizontal incluant le point O, et sécant du plan P1 suivant une trace rectiligne 16, l'orientation de l'axe 9 définie par l'angle bêta que ce dernier forme avec la ligne 16 dans le plan P1 et par l'angle alpha que forme la ligne 16 par rapport à la direction 13 parallèle à l'axe 3 dans le plan P2, et la conicité de la surface 14 définie par l'angle gamma sont choisies telles que, lors de la rotation de la tourelle 8 autour de l'axe 9 par rapport au support 7 entre les positions OA et OB de la direction moyenne 11 du bras 10, l'ensemble des parties du dispositif 4 mobiles lors de cette rotation, et notamment le bras 10, l'organe de préhension 12 et la pièce que porte éventuellement celui-ci, contournent les obstacles que peuvent constituer les différentes parties du tour 1, comme par exemple les carters 17 de protection de celui-ci.

De préférence, dans l'application du dispositif selon l'invention 4 illustrée, on choisira de la façon suivante les valeurs des angles alpha, bêta et gamma tels que définis ci-dessus et illustrés à la figure 1 :

$$35° \leqslant \alpha \leqslant 50°$$
$$0° \leqslant \beta \leqslant 45°$$
$$35° \leqslant \gamma \leqslant 50°$$

Naturellement, ces valeurs sont indiquées à titre d'exemple non limitatif et d'autres valeurs pourraient être choisies sans que l'on sorte pour autant du cadre de l'invention.

On notera que les angles caractéristiques alpha, bêta, gamma sont fixes lorsque le dispositif 4 est en fonctionnement.

On va à présent décrire ce fonctionnement en référence aux figures 2 à 4.

A la figure 2, on a illustré en trait plein un état du dispositif correspondant à la prise d'une pièce tournée 18, placée dans la broche porte-pièce 2 du tour.

Le bras 10 occupe par rapport au support 7 la position illustrée à la figure 1, à savoir une position telle que sa direction moyenne 11 soit sécante de l'axe 3, et l'organe de préhension 12 ici en forme de pince enveloppe partiellement la pièce 18 par le haut et en est rendu solidaire par exemple par serrage.

La pièce 18 est encore solidaire de la broche porte-pièce 2, dont on la libère dans un premier temps de façon connue en soi.

Une fois la pièce 18 libérée, on déplace le support 7 le long des rails 5 dans un sens 19 correspondant à l'éloignement de la pièce 18 par rapport à la broche 2 suivant l'axe 3 de cette dernière ; au cours de cette translation, la tourelle 8 et le bras 10 qu'elle porte restent immobiles par rapport au support 7 et la pièce 18 subit exclusivement un mouvement de translation suivant l'axe 3, dans le sens 19.

La figure 2 montre en pointillés la position du dispositif 4 selon l'invention à la fin de cette première phase de son fonctionnement.

Dans une deuxième phase, la tourelle 8 entame un mouvement de pivotement par rapport au support 7 autour de l'axe 9 ; dans l'exemple illustré, le pivotement se traduit dans un premier temps par un mouvement ascendant de l'organe de préhension 12 et de la pièce 18 qui en est solidaire, puis par un mouvement descendant qui amène la direction moyenne 11 du bras 10 en 13, position finale illustrée en trait plein sur la figure 4 ; la figure 3 illustre une position intermédiaire, et montre comment le bras 10, l'organe de préhension 12 et la pièce 18 qu'il porte évitent le carter 17 du tour au cours de ce mouvement.

Lorsque le dispositif selon l'invention 4 occupe la position illustrée à la figure 4, l'organe de préhension 12 et la pièce 18 qu'il porte se trouvent à l'aplomb vertical de la face supérieure 20, par exemple horizontale, d'un transporteur 21 au-dessus duquel l'organe de préhension 12, commandé de façon appropriée, libère la pièce 18 qui est alors entraînée par le transporteur 21, comme le schématise une flèche 22 ; cette libération peut être précédée d'une rotation du bras 10 et de l'organe 12 autour de la direction moyenne 11, par rapport à la tourelle 8, de façon à placer la pièce 18 dans une orientation prédéterminée, comme c'est par exemple le cas dans l'exemple illustré où la pièce 18 présente un axe propre 23, confondu avec l'axe 3 pendant le tournage, et que l'on oriente verticalement avant de libérer la pièce au-dessus du transporteur 21 ; cette rotation du bras 10 et de l'organe de préhension 12 sur eux-mêmes peut s'effectuer alors que la pièce est déjà placée au-dessus du transporteur 21, mais, avantageusement, elle a lieu au préalable, soit alors que le dispositif selon l'invention 4 occupe encore la position illustrée en pointillés à la figure 2, soit au cours du pivotement de la tourelle 8 autour de l'axe 9 par rapport au support 7, schématisé à la figure 3.

Une fois la pièce 18 dégagée de l'organe de préhension 12, le support 7 accomplit un mouvement de translation le long des rails 5 en sens inverse du sens 19, pour présenter l'organe de préhension 12 au-dessus de la face supérieure 24, par exemple horizontale et plane, d'un transporteur 25 juxtaposé au transporteur 21 ; la face supérieure 24 du transporteur 25 achemine dans le sens 26, inverse du sens 22, une pièce à tourner 27, analogue à la pièce 18 et présentant un axe propre 28 de même orientation que l'axe 23 de la pièce 18 lorsque celle-ci est déposée sur la face supérieure 20 du transporteur 21, pour

4

introduire cette pièce 27 dans l'organe de préhension 12, que des moyens appropriés du domaine des connaissances de l'homme du métier solidarisent alors avec la pièce 27 ; la position correspondante du dispositif selon l'invention 4 est illustrée en pointillés, partiellement, à la figure 4.

Ensuite, le dispositif regagne la position illustrée à la figure 4 en trait plein, par une translation du support 7 dans le sens 19, puis la tourelle 8 effectue une rotation autour de l'axe 9 par rapport au support 7, pour regagner la position illustrée en pointillés à la figure 2 ; au cours de ce mouvement, la direction moyenne 11 du bras 10 décrit la surface conique 14, et l'organe de préhension 12 portant la pièce 27 accomplit un mouvement circulaire selon le cercle 15, ce mouvement étant d'abord ascendant puis descendant jusqu'à ce que la direction moyenne 11 du bras occupe à nouveau l'orientation OA, sécante de l'axe 3 de la broche.

Au cours d'une phase quelconque de ce mouvement, éventuellement après celui-ci, le bras 10 accomplit un mouvement de rotation sur lui-même autour de sa direction moyenne 11, par rapport à la tourelle 8, de telle sorte que l'axe 28 de la pièce 27 se confonde avec l'axe 3 de la broche porte-pièce 2 lorsque le dispositif parvient dans l'état illustré en pointillés à la figure 2.

Ensuite, un mouvement de translation du support 7 en sens inverse du sens 19 introduit la pièce 27 dans la broche porte-pièce 2, avec laquelle on solidarise la pièce 27 avant de dégager celle-ci de l'organe de préhension 12 qui peut éventuellement être escamoté, par une rotation de la tourelle 8 par rapport au support 7, autour de l'axe 9, dans le sens d'un retour de la direction moyenne 11 du bras 10 de l'orientation OA vers l'orientation OB ; lorsque le tournage de la pièce est terminé, l'organe de préhension 12 est dans ce cas ramené dans une position de préhension de la pièce, puis solidarisé avec cette dernière pour le recommencement du cycle ci-dessus.

Naturellement, de nombreuses variantes peuvent être apportées au dispositif qui vient d'être décrit, en fonction de l'utilisation envisagée, c'est-à-dire notamment du type de machine-outil à équiper.

Les angles alpha, bêta et gamma, de même que la longueur du bras 10, c'est-à-dire la longueur de OA ou de OB, qui sont des constantes pendant le fonctionnement du dispositif, peuvent notamment varier considérablement en fonction des besoins.

Pour permettre une standardisation du dispositif selon l'invention, c'est-à-dire une adaptation des grandeurs alpha, bêta, gamma et OA ou OB en fonction des besoins en utilisant un même dispositif, on prévoit une réalisation de celui-ci offrant des possibilités de réglage de ces grandeurs, par exemple dans les limites préalablement définies à titre indicatif en ce qui concerne les angles alpha, bêta et gamma.

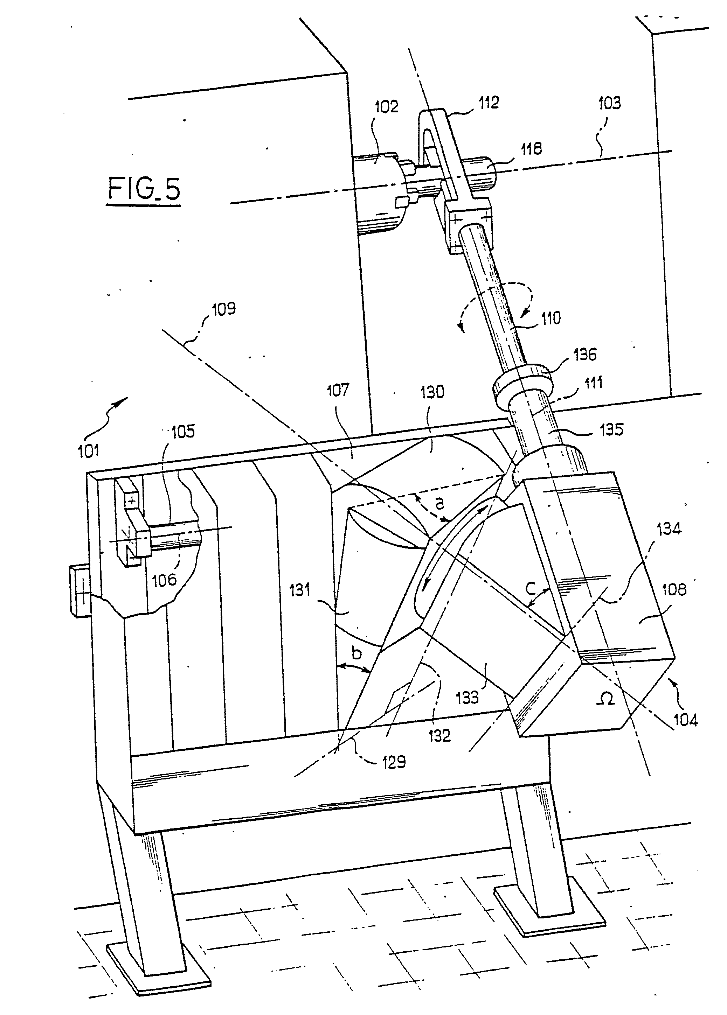

Un mode de réglage de ces grandeurs est illustré, à titre d'exemple non limitatif à la figure 5, où le dispositif est illustré dans le même état qu'à la figure 2.

Les différents éléments du dispositif illustré aux figures 1 à 4 se retrouvent dans le dispositif illustré à la figure 5, où on les a désignés par les mêmes références, incrémentées de 100.

Notamment, on retrouve une broche 102 d'axe horizontal 103, une pluralité de rails 105, dont un seul est visible, fixés sur le côté du tour 101 et présentant une direction moyenne 106 parallèle à l'axe 103, un support 107 monté à la translation le long des rails 105 et portant une tourelle 108 montée à la rotation sur lui autour d'un axe 109, la tourelle 108 portant un bras 110 présentant une direction moyenne 111 sécante de l'axe 109 en un point Ω, le bras 110 portant en outre un organe de préhension 112 pour une pièce 118, que le dispositif selon l'invention a pour rôle d'amener dans l'axe 103 ou hors d'alignement par rapport à cet axe.

Contrairement à ce qui a été décrit en référence aux figures 1 à 4, l'axe 109 de rotation de la tourelle 108 par rapport au support 107 peut être réglé quant à sa position par rapport au support 107.

A cet effet, le support 107 porte, de façon mobile par rapport à lui autour d'un axe 129 par exemple horizontal et situé dans un plan vertical sécant des axes 103 et 106, avec possibilité d'immobilisation relative, une première partie mobile 130 qui, elle-même, porte une deuxième partie mobile 131 montée sur cette partie 130 à la rotation relative, avec possibilité d'immobilisation relative, autour d'un axe 132 par exemple perpendiculaire à l'axe 129 ; l'axe 129 est fixe par rapport au support 107 et à la première partie 130; et l'axe 132 est fixe par rapport à cette première partie 130 et par rapport à la deuxième partie 131.

La partie 131 porte elle-même les moyens définissant, avec des moyens complémentaires portés par la tourelle 108, l'axe 109 de rotation de la tourelle 108 par rapport au support 107.

On démontre aisément que la possibilité de réglage de la première partie 130 à la rotation autour de l'axe 129 par rapport au support 107, avec un débattement schématisé en b, et de réglage de la position de la deuxième partie 131 par rapport à la première partie 130 par rotation autour de l'axe 132, avec un débattement schématisé en a, permet de régler l'orientation de l'axe 109, définie par les angles alpha et bêta en ce qui concerne l'axe 9 du mode de réalisation illustré aux figures 1 à 4.

Selon le mode de réalisation préféré illustré à la figure 5, les moyens portés par la tourelle 108 et définissant, avec des moyens portés par la deuxième partie 131 du support 107, l'axe de rotation 109 ne sont pas portés directement par la tourelle 108 proprement dite, mais sont portés par une partie intermédiaire 133, sur laquelle la tourelle proprement dite 108 est montée à la rotation, avec possibilité d'immobilisation relative, autour d'un axe 134 perpendiculaire au plan défini par l'axe 109 et la direction moyenne 111 du bras 110, sécants en oméga.

Ainsi, par réglage de la position relative de la tourelle proprement dite 108 et de la partie intermédiaire 133, par rotation relative autour de l'axe 134 avec un débattement c, on peut régler l'angle que forme la direction moyenne 111 du bras 110 par rapport à l'axe 109, désigné par gamma en ce qui concerne les figures 1 à 4, c'est-à-dire régler le demi-angle au sommet de la surface conique que décrit la direction moyenne 111 du bras 110 lors de la rotation de l'ensemble formé par la tourelle 108, le bras 110, l'organe de préhension 112 et le cas échéant la pièce 118, autour de l'axe 109 par rapport au support 107.

En outre, dans ce mode de mise en œuvre préféré de l'invention, la longueur apparente du bras 110, correspondant par exemple à la longueur du segment OA ou OB si l'on se réfère aux figures 1 à 4, peut être réglée.

A cet effet, la direction 111 étant fixe par rapport à la tourelle 108, le bras 110 est monté à coulissement le long de cette direction moyenne 111 à l'intérieur d'un fourreau 135 lui-même fixe par rapport à la tourelle 108 vis-à-vis de la translation suivant la direction 111, mais susceptible d'être entraîné à volonté à la rotation autour de la direction 111 par rapport à la tourelle 108 pour permettre la rotation du bras 110 sur lui-même autour de la direction 111 par rapport à la tourelle 108, ainsi que celle de l'organe de préhension 112 et de la pièce 118 qu'il porte éventuellement ; l'immobilisation du bras 110 à la translation suivant la direction 111 à l'intérieur du fourreau 105 est empêchée, une fois le réglage de la longueur apparente du bras 110 effectué, par exemple par une bague de serrage 112 portée par le fourreau 111.

Ainsi, dans le cas du mode de réalisation du dispositif selon l'invention 104 illustré à la figure 5, tous les paramètres caractéristiques que constituent alpha, bêta, gamma et la longueur de OA ou OB du dispositif illustré aux figures 1 à 4 peuvent être réglés afin de permettre une adaptation à la forme et aux dimensions de la machine-outil telle qu'un tour 101 desservie. Cependant, ces grandeurs sont fixes pendant le fonctionnement du dispositif.

Le cas échéant, il est cependant possible de prévoir des variantes du dispositif n'autorisant qu'une partie des réglages du dispositif illustré à la figure 5.

A titre d'illustration des possibilités d'adaptation du dispositif selon l'invention à des machines-outils présentant des caractéristiques différentes, le tableau ci-dessous indique les valeurs des angles α, β, γ dans le cas d'une adaptation à trois tours différents, dont la broche présente un axe horizontal auquel la direction moyenne du bras est perpendiculaire dans la position de reprise ou de mise en place d'une pièce dans la broche :

| Type de tour | Angles en degrés | | | côté duquel le dispositif est monté |
|---|---|---|---|---|
| | α | β | γ | |
| MARC 8 ⎱ PANURHIN | 38° | 30° | 36° 30' | côté poupée |
| MAT 65 ⎰ | 45° | 6° | 50° | côté contre pointe |
| WARNER AND SWASEY 1-SC | 45° | 0° | 45° | côté contre pointe |

Les moyens permettant d'effectuer les différents réglages décrits sont du domaine des aptitudes normales de l'homme du métier, qui pourra dans la pratique apporter de nombreuses modifications aux exemples de mise en œuvre de l'invention décrits et représentés, sans sortir pour autant du cadre de la présente invention, les réglages en orientation peuvent aisément être réalisés au moyen d'un pivot reliant les pièces à régler en orientation relative, de glissières axées sur ce pivot et associées respectivement à l'une et l'autre pièces, et de moyens d'immobilisation relative à volonté, par exemple par serrage mutuel, de ces glissières ; ceci ne constitue naturellement qu'un exemple non limitatif.

De préférence, quel que soit le mode de réalisation adopté, la position instantanée de l'organe de préhension sera commandée et contrôlée en continu, de façon automatique, par des moyens connus en eux-mêmes de l'homme du métier.

**Revendications**

1. Dispositif de chargement et déchargement de pièces pour une machine-outil, telle qu'une machine de tournage, présentant des moyens porte-pièce (2, 102) d'axe déterminé (3, 103), ce dispositif comportant un support (7, 107) porté par la machine et un organe de préhension (12, 112) pour une pièce (18, 118), lequel est solidaire d'un bras (10, 110) présentant une direction moyenne propre (11, 111), relié au support (7, 107) par l'intermédiaire de moyens d'articulation (7, 8, 9, 107, 108, 109) guidant le bras (10, 110) de telle sorte que sa direction moyenne (11, 111) décrive une surface (14) conique de révolution autour d'un axe (9, 109) fixe par rapport au support (7, 107) pour autoriser le déplacement de l'organe de préhension (12, 112) par rapport au support (7, 107) entre au moins deux positions privilégiées dans lesquelles cet organe de préhension (12, 112) est respectivement placé dans l'axe des moyens porte-pièce (2, 102), par rapport auquel la direction moyenne (11, 111) du bras (10, 110) présente alors une orientation déterminée, et décalé par rapport à celui-ci, caractérisé en ce qu'il comporte des moyens (133, 134) pour régler la conicité ($\gamma$, c) de ladite surface conique (14).

2. Dispositif selon la revendication 1, caractérisé en ce qu'il comporte des moyens (129, 130, 131, 132) pour régler l'orientation ($\alpha$, $\beta$) de l'axe (9, 109) de la surface conique (14).

3. Dispositif selon la revendication 2, caractérisé en ce qu'il comporte des moyens (129, 130, 131, 132) pour régler l'orientation ($\beta$) de l'axe (9, 109) de la surface conique (14) par rapport à un plan horizontal ($P_2$).

4. Dispositif selon l'une quelconque des revendications 2 et 3, caractérisé en ce qu'il comporte des moyens (129, 130, 131, 132) pour régler l'orientation ($\alpha$) d'un plan vertical ($P_1$) incluant l'axe (9, 109) de la surface conique (14) par rapport à l'axe (3, 103) des moyens porte-pièce (2, 102).

5. Dispositif selon l'une quelconque des revendications précédentes, caractérisé en ce qu'il comporte des moyens (135, 136) pour régler la position de l'organe de préhension (12, 112) par rapport à l'intersection (0, $\Omega$) de la direction moyenne (11, 111) du bras (10, 110) et de l'axe (9, 109) de la surface conique (14).

6. Dispositif selon l'une quelconque des revendications précédentes, caractérisé en ce qu'il comporte des moyens pour autoriser la rotation du bras (10, 110) sur lui-même autour de sa direction moyenne (11, 111).

7. Dispositif selon l'une quelconque des revendications précédentes, caractérisé en ce qu'il comporte des moyens (5, 105) pour déplacer le support (7, 107) à la translation suivant une direction (6, 106) parallèle à l'axe (3, 103) des moyens porte-pièce (2, 102) par rapport à la machine (1, 101).

8. Dispositif selon l'une quelconque des revendications précédentes, caractérisé en ce que la direction moyenne (11, 111) du bras (10, 110) est perpendiculaire à l'axe (3, 103) des moyens porte-pièce (2, 102) quand l'organe de préhension (12, 112) occupe ladite position privilégiée (A) dans l'axe (3, 103) des moyens porte-pièce (2, 102).

9. Dispositif selon l'une quelconque des revendications précédentes, caractérisé en ce que la direction moyenne (11, 111) du bras est parallèle à l'axe (3, 103) des moyens porte-pièce (2, 102) quand l'organe de préhension (12, 112) occupe ladite position privilégiée (B) décalée par rapport à l'axe (3, 103) des moyens porte-pièce (2, 102).

10. Dispositif selon les revendications 8 et 9 en combinaison, l'axe des moyens porte-pièce étant horizontal, caractérisé en ce que :

$$35° \leqslant \alpha \leqslant 50°$$
$$0° \leqslant \beta \leqslant 45°$$
$$35° \leqslant \gamma \leqslant 50°$$

où $\gamma$ désigne le demi-angle au sommet de ladite surface conique (14), $\beta$ l'angle que forme l'axe (9, 109) de cette dernière avec un plan horizontal ($P_2$) et $\alpha$ l'angle que forme, avec une direction (13) incluse dans le plan ($P_2$) et parallèle à l'axe (3, 103) des moyens porte-pièce (2, 102), la trace (16), dans ce plan ($P_2$), d'un plan vertical ($P_1$) incluant l'axe (9, 109) de la surface conique (14).

11. Dispositif selon l'une quelconque des revendications précédentes, caractérisé en ce que la position instantanée de l'organe de préhension (12, 112) est commandée et contrôlée de façon automatique, en continu.

## Claims .

1. Device for loading and unloading workpieces for a machine tool, such as a lathe, having workpiece-holding means (2, 102) of specific axis (3, 103), this device comprising a support (7, 107) carried by the machine and a member (12, 112) for gripping a workpiece (18, 118) and fast to an arm (10, 110) which has an inherent mean direction (11, 111) and which is connected to the support (7, 107) via articulation means (7, 8, 9, 17, 108, 109) guiding the arm (10, 110) in such a way that its mean direction (11, 111) describes a conical surface of revolution (14) about an axis (9, 109) fixed relative to the support (7, 107), to allow the gripping member (12, 112) to move relative to the support (7, 107) between at least two preferential positions (A, B), in which this gripping member (12, 112) is respectively placed (A) in the axis of the workpiece-holding means (2, 102), in relation to which the mean direction (11, 111) of the arm (10, 110) then has a specific orientation, and (B) offset relative to the said axis, characterised in that such device comprises means (133, 134) for adjusting the conicity ($\gamma$, c) of the said conical surface (14).

2. Device according to claim 1, characterised in that it comprises means (129, 130, 131, 132) for adjusting the orientation ($\alpha$, $\beta$) of the axis (9, 109) of the conical surface (14).

3. Device according to claim 2, characterised in that it comprises means (129, 130, 131, 132) for adjusting the orientation ($\beta$) of the axis (9, 109) of the conical surface (14) in relation to a horizontal plane ($P_2$).

4. Device according to either of claims 2 and 3, characterised in that it comprises means (129, 130, 131, 132) for adjusting the orientation ($\alpha$) of a vertical plane ($P_1$) including the axis (9, 109) of the conical surface (14) in relation to the axis (3, 103) of the workpiece-holding means (2, 102).

5. Device according to any one of the preceding claims, characterised in that it comprises means (135, 136) for adjusting the position of the gripping member (12, 112) in relation to the intersection (0, $\Omega$) of the mean direction (11, 111) of the arm (10, 110) and the axis (9, 109) of the conical surface (14).

6. Device according to any one of the preceding claims, characterised in that it comprises means permitting the arm (10, 110) to rotate on itself about its mean direction (11, 111).

7. Device according to any one of the preceding claims, characterised in that it comprises means (5, 105) for moving the support (7, 107) in translation in a direction (6, 106) parallel to the axis (3, 103) of the workpiece-holding means (2, 102) in relation to the machine (1, 101).

8. Device according to any one of the preceding claims, characterised in that the mean direction (11, 111) of the arm (10, 110) is perpendicular to the axis (3, 103) of the workpiece-holding means (2, 102), when the gripping member (12, 112) occupies the preferential position (A) in the axis (3, 103) of the workpiece-holding means (2, 102).

9. Device according to any one of the preceding claims, characterised in that the mean direction (11, 111) of the arm is parallel to the axis (3, 103) of the workpiece-holding means (2, 102), when the gripping member (12, 112) occupies the said preferential position (B) offset relative to the axis (3, 103) of the workpiece-holding means (2, 102).

10. Device according to claims 8 and 9 in combination, the axis of the workpiece-holding means being horizontal, characterised in that :

$$35° \leqslant \alpha \leqslant 50°$$
$$0° \leqslant \beta \leqslant 45°$$
$$35° \leqslant \gamma \leqslant 50°$$

in which $\gamma$ denotes the half-angle at the vertex of the said conical surface (14), $\beta$ denotes the angle which the axis (9, 109) of the latter forms with the horizontal plane ($P_2$) and $\alpha$ denotes the angle formed between a direction (13) included in the plane ($P_2$) and parallel to the axis (3, 103) of the workpiece-holding means (2, 102) and the line (16) in the plane ($P_2$) and parallel to the axis (3, 103) of the workpiece-holding means (2, 102) and the line (16) in the plane ($P_2$) of a vertical plane ($P_1$) including the axis (9, 109) of the conical surface (14).

11. Device according to any one of the preceding claims, characterised in that the instantaneous position of the gripping member (12, 112) is continuously and automatically commanded and controlled.

### Patentansprüche

1. Werkstückhandhabungsvorrichtung für Werkzeugmaschinen wie etwa Drehmaschinen, die einen Werkstückhalter (2, 102) mit einer festen Achse (3, 103) aufweisen, mit einem von der Maschine getragenen Support (7, 107) und einem für ein Werkstück (18, 118) vorgesehenen Greiforgan (12, 112), das mit einem eine geeignete Längsmittellinie bzw. Längsachse (11, 111) aufweisenden Arm (10, 110) fest und über eine Gelenkverbindungseinrichtung (7, 8, 9, 107, 108, 109) mit dem Support (7, 107) gelenkig bzw. beweglich verbunden ist, wobei der Arm (10, 110) durch die Gelenkverbindungseinrichtung derart geführt ist, daß dessen Längsachse (11, 111) in ihrer Drehung um eine in bezug auf den Support (7, 107) feste bzw. feststehende Achse (9, 109) eine konische Fläche (14) beschreibt, um so die Verschiebung bzw. Verstellung des Greiforgans gegenüber dem Support (7, 107) zwischen wenigstens zwei bevorzugten Positionen zu ermöglichen, in welchen das Greiforgan (12, 112) jeweils in der Achse des Werkstückhalters (2, 102), in bezug auf welche die Längsachse (11, 111) des Arms (10, 110) eine bestimmte Orientierung aufweist, angeordnet und in bezug auf diese versetzt bzw. verschoben ist, gekennzeichnet durch eine Einrichtung (133, 134) zur Einstellung des Konizität ($\gamma$, c) der konischen Fläche (14).

2. Vorrichtung nach Anspruch 1, gekennzeichnet durch eine Einrichtung (129, 130, 131, 132) zur Einstellung der Orientierung ($\alpha$, $\beta$) der Achse (9, 109) der konischen Fläche (14).

3. Vorrichtung nach Anspruch 2, gekennzeichnet durch eine Einrichtung (129, 130, 131, 132) zur Einstellung der Orientierung ($\beta$) der Achse (9, 109) der konischen Fläche (14) in bezug auf eine horizontale Ebene ($P_2$).

4. Vorrichtung nach einem der Ansprüche 2 und 3, gekennzeichnet durch eine Einrichtung (129, 130, 131, 132) zur Einstellung der Orientierung ($\alpha$) einer die Achse (9, 109) der konischen Fläche (14) enthaltenden vertikalen Ebene ($P_1$) in bezug auf die Achse (3, 103) des Werkstückhalters (2, 102).

5. Vorrichtung nach einem der vorhergehenden Ansprüche, gekennzeichnet durch eine Einrichtung (135, 136) zur Einstellung der Position des Greiforgans (12, 112) in bezug auf den Schnittpunkt (0, $\Omega$) der Längsachse (11, 111) des Arms (10, 110) und der Achse (9, 109) der konischen Fläche (14).

6. Vorrichtung nach einem der vorhergehenden Ansprüche, gekennzeichnet durch eine Einrichtung, die eine Drehung des Arms (10, 110) selbst um seine Längsachse (11, 111) erlaubt.

7. Vorrichtung nach einem der vorhergehenden Ansprüche, gekennzeichnet durch eine Einrichtung (5, 105) für die translatorische Verschiebung bzw. Versetzung des Supports (7, 107) in einer zu der Achse (3, 103) des Werkstückhalters (2, 102) parallel verlaufenden Richtung in bezug auf die Maschine (1, 101).

8. Vorrichtung nach einem der vorhergehenden Ansprüche, dadurch gekennzeichnet, daß sich die Längsachse (11, 111) des Arms (10, 110) senkrecht zur Achse (3, 103) des Werkstückhalters (2, 102) erstreckt, wenn das Greiforgan (12, 112) die genannte bevorzugte Position (A) in der Achse (3, 103) des Werkstückhalters (2, 102) einnimmt.

9. Vorrichtung nach einem der vorhergehenden Ansprüche, dadurch gekennzeichnet, daß sich die Längsachse (11, 111) des Arms parallel zur Achse (3, 103) des Werkstückhalters (2, 102) erstreckt, wenn das Greiforgan (12, 112) die genannte bevorzugte Position (B) einnimmt, die in bezug auf die Achse (3, 103) des Werkstückhalters (2, 102) versetzt bzw. verschoben ist.

10. Vorrichtung nach den Ansprüchen 8 und 9 in Kombination, wobei sich die Achse des Werkstückhalters in horizontaler Richtung erstreckt, dadurch gekennzeichnet, daß

$$35° \leqslant \alpha \leqslant 50°$$
$$0° \leqslant \beta \leqslant 45°$$
$$35° \leqslant \gamma \leqslant 50°,$$

wobei $\gamma$ den Halbwinkel an der Spitze der konischen Fläche (14), $\beta$ den durch die Achse (9, 109) der letztgenannten zusammen mit einer horizontalen Ebene ($P_2$) gebildeten Winkel und $\alpha$ den Winkel bezeichnet, der durch die Umrißlinie (16), in dieser Ebene ($P_2$), einer die Achse (9, 109) der konischen Fläche (14) enthaltenden vertikalen Ebene ($P_1$) zusammen mit der Richtung (13) gebildet wird, die in der Ebene ($P_2$) enthalten ist, und die parallel zur Achse (3, 103) des Werkstückhalters (2, 102) verläuft.

11. Vorrichtung nach einem der vorhergehenden Ansprüche, dadurch gekennzeichnet, daß die jeweils momentane Lage des Greiforgans (12, 112) automatisch und kontinuierlich eingestellt und gesteuert wird.

FIG_1

FIG. 2

FIG. 3

FIG. 4

# FIG.5